# EUROPEAN PATENT SPECIFICATION

(11) **EP 0 532 715 B1**
(45) Date of publication and mention of the grant of the patent: **02.09.1998**
(21) Application number: 91921013.8
(22) Date of filing: 30.05.1991
(51) Int. Cl.: B32B 27/12

(54) **METHOD FOR MANUFACTURING A COMPOSITE ARTICLE AND COMPOSITE ARTICLE**
VERFAHREN ZUR HERSTELLUNG EINES VERBUNDWERKSTOFFES SOWIE VERBUNDWERKSTOFF
PROCEDE DE FABRICATION D'UN ARTICLE COMPOSITE ET ARTICLE COMPOSITE AINSI FABRIQUE

(30) Priority: 31.05.1990 FI 902718
(43) Date of publication of application: 24.03.1993
(73) Proprietor: VALTION TEKNILLINEN TUTKIMUSKESKUS, 02151 Espoo (FI)
(72) Inventor: SUOKAS, Esa, SF-33580 Tampere (FI); KARTTUNEN, Mikko, SF-33560 Tampere (FI)
(74) Representative: Feldmann, Clarence Paul
(86) International application number: FI9100173
(87) International publication number: WO9118741

(56) References cited:
- WO-A-89/07673
- DE-A- 2 257 499
- DE-B- 2 503 431

## Description

The invention relates to a method for manufacturing of a composite article, as defined in the preamble of claim 1, as well as to a composite article according to claim 11.

A composite is defined as a combination of two or more materials. When two different substances are combined in the microscopical scale, a macroscopically homogenous material, that is, a composite, is formed. The composite will often have the best properties of both components and it may also have quite new properties. The composites show usually the following improved properties:
- strength
- rigidity
- weight
- external appearance
- thermotechnical properties
- heat conductance
- heat insulation
- fatigue durability
- corrosion resistance
- wear resistance
- sound insulation

Of course, all the above-mentioned points do not change at the same time.

At the present, the composites have aroused interest very widely, because they are suitable for structures which are light and require great rigidity and strength. New composite materials have been developed mainly by the aircraft and space industry. The thermosetting plastics cross-linkable by heat, such as polyesters and epoxy resins have been conventionally matrices for the composites, but the situation is slowly changing with the development of new technical thermoplastic plastic materials having good physical properties.

The properties of the composites are due mainly to continuous technical fibres, which have been on the market since the Second World War. The most important are carbon, aramid and glass fibres (in the order given), and ceramic boron and silicon carbide and aluminium oxide can be given as examples of other interesting compounds. Conventional matrices for the structural composites are represented by thermally cross-linkable epoxy resins, polyesters, polyimides, phenols, vinylesters and silicones. Relatively good thermotechnical properties, moderate chemical strength and dimensional stability are regarded as advantages of the thermosetting plastics. During the last decennium the composite technology based on thermosetting matrices has reached a level on which the sufficient performance of the articles is combined with quite an effective manufacturing technique. The brittleness, sensitivity to moisture and the slow chemical manufacturing method connected with a short storage stability of the basic reagents has become a slowing factor and in some cases even a bar for the future development of the composites made of thermosetting plastics. The present thermosetting matrices requiring a slow cross-linking reaction make the manufacturing times longer and restrict the design and treatment of the article, thus raising the processing expenses.

The use of thermoplastic plastic matrices in the composites will increase with the developing work of new technical polymers, such as polypropene (PP), polyphenylenesulphide (PPS), polyetheretherketone (PEEK) and polyethersulphone (PES). Briefly, the following factors will contribute to the breakthrough of thermoplastic matrices:
- greater rigidity, which is shown f.ex. by a better compression strength and resistance to the propagation of crack between laminated plates after a hard impact, compared with thermosetting plastics
- smaller sensitivity to moisture, that is, smaller hygroscopicity,
- higher continuous temperatures in use (for some polymers)
- better resistance to chemicals (for some polymers)
- greater compression strength in hot and moist conditions
- easily realizable physical thermoforming and/or pressure forming
- thermoforming and/or pressure forming can be repeated several times, broken structures can be repaired easily
- refuse pieces and waste from finishing are suitable as raw material for e.g. injection moulding
- lower manufacturing costs, for example storage stability of thermoplastic granulates nearly infinite, no expensive cooling equipment needed
- articles fabricated from different batches are of a more uniform quality
- possibility to apply moulding techniques of metals

Nowadays mainly the aircraft industry is shifting towards the use of thermoplastic plastic composites with continuous fibres, because they have a better durability in hot and moist conditions than have the thermosetting plastic composites. When thermoplastic plastics are used they serve usually as the matrix of the composite, in which event they either are extruded to a film or defibrated. Well-known techniques for manufacturing of thermoplastic composites are for example:
- Alternate stacking of matrix films and reinforcing fibres by compression moulding (film stacking)
- Hybrid fibres, yarns and fabrics (blend of reinforcing and matrix fibers)
- Powder impregnation
- Solution impregnation
- Melt impregnation for example by crosshead die, pultrusion and winding.

The viscosity of the thermoplastic plastics is high, thus resulting in difficulties to thoroughly wet various reinforcing fibres with them. In addition, the melt impregnation results in stiff plates which require very expensive compression moulds in their further processing to shaped articles. In the finished product some areas void of matrix and having uneven wall thicknesses may be produced in course of compression. Further, the stiff technical reinforcing fibres may be damaged by buckling because of compression moulding, which makes the mechanical properties of the finished composite poorer. When hybrid fibres are used, they must be first formed to a yarn, whereafter they usually are woven and laminated and compressed by means of pressure and heat to an article.

In the methods known heretofore the difficulty has been to find such a reinforcing material that would have good properties as regards strength, but which at the same time would be useful as regards the technical methods.

Further, from US-A-3934064 is known a composite product where a knitted fabric is partly embedded in a sheet of perhalopolyfluoroethylene polymer resin. This is done by applying sufficient pressure and heat to the sheet. A castable thermosetting type material can be applied on top of the sheet where the knitted fabric is exposed. This method suffers from limitations with regard to materials that can be used as the matrix.

The object of the invention is to accomplish a dry impregnation method which can be particularly well used especially in such applications that require an easy shaping of the material combination before the thermal compression stage. For achieving said goal the method according to the invention is mainly characterized by what is disclosed in the characterizing portion of claim 1. The invention is based on the use of a knitted web as the structure that reinforces the matrix.

By the method according to the invention, composites of thermoplastic matrix can be manufactured continuously by the present-day mass production methods at a high rate and with a reasonable price. By means of the method according to the invention the matrix can be also distributed very uniformly onto the reinforcement. By means of the invention, articles having a very wide surface and geometric versatility can be manufactured. The dry-impregnated half-fabricate with a thermoplastic matrix (prepreg) is most preferably a flexible product, which is both well settled (drapeable) and easily and stably formed in difficult mould geometries, of which spherical articles can be mentioned as one example. By means of heat and pressure said prepreg can be brought to a rigid plate-like shape, which can be shaped to an article by compression moulding. As the flexible half-fabricate is passed through a heating zone, it can be formed by means of a negative or positive pressure to a shaped article. The method according to the invention makes it thus possible to provide an integrated continuous manufacturing line for articles having a wide surface and complicated geometry, the line comprising the feed of the raw-materials (matrix felt and/or fibres and/or particles and the knitted web), prebonding to the knitted web, the heating and pressure zone as well as the finishing stages. In said manner for example various components of the inner and outer part of a car body can be manufactured at a high rate. In the most preferable case the flexible thermoplastic half-fabricate can be delivered to the end user, which brings it by means of heat and pressure to the final shape of the product.

The method in question is not only limited to thermoplastic plastics, but it can be also used for manufacturing similar articles by carbonization, in which event the thermal compression will be replaced by a stage in a chamber in a protective atmosphere. When for example phenol, viscose or polyacrylonitrile fibers are used as the matrix and the material for the knitted web is of ceramic, mineral or rock fibre the matrix can be carbonized resulting in carbon reinforced with knitted web. If for example phenol is used, amorphous carbon is obtained in the end. If the felt and the knitted web are both of a carbonizable material, a carbon/carbon composite is obtained in the carbonizing process, retaining the reinforcing component still in the form of a knitted web. The impact strength of said carbon components is higher than that of the materials without a reinforcement.

By means of the dry impregnation method of the invention it is possible to produce reinforced thermoplastic composites that are needed in for example cars, boats, aircraft as well as in the building and process industry.

The composite article according to the invention is characterized by what is disclosed in the characterizing portion of claim 11. The continuous solid phase constituted of the matrix material contains a knitted web as the reinforcing material. The advantages of the articles reside, in addition to the advantages connected with their manufacture, in the versatility of shapes and good strength properties.

The invention will be described more closely in the following with reference to the accompanying drawings, of which
- Fig. 1: shows in cross-section a part of a dimensionally stable shaped composite article manufactured by means of the method of the invention,
- Fig. 2: shows schematically the different stages of the method,
- Fig. 3: shows in cross-section the intermediate product obtained in the method,
- Fig. 4: shows the same intermediate product manufactured according to another alternative of the method,
- Fig. 5: shows the intermediate product manufactured according to a third alternative of the method,
- Fig. 6: shows the possibility to place layers of reinforcing material in the product, taken in cross-section perpendicularly to the plane of the intermediate product and in section parallel to the plane, respectively,
- Fig. 7: shows another alternative for the placement of layers of reinforcing material in the product,
- Fig. 8: shows a preferred embodiment of the layer of reinforcing material, and
- Fig. 9: shows a yarn type for the layer according to Fig. 8.

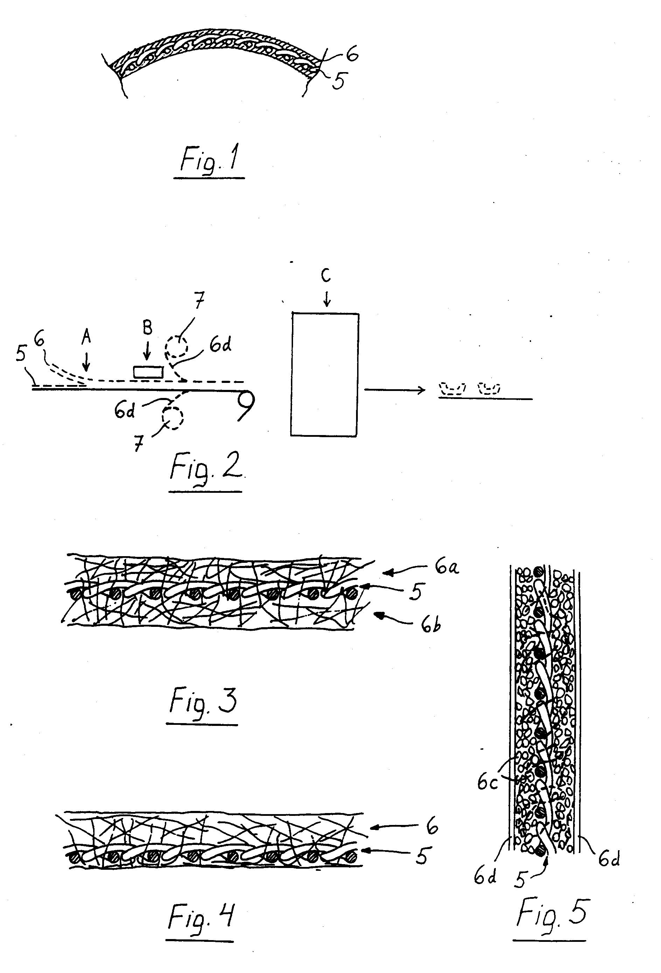

Fig. 1 shows a part of a dimensionally stable shaped composite article manufactured by the method according to the invention. In the manner common to all composites, the article consists of matrix material 6 and a layer 5 of reinforcing material embedded at least partly in the matrix material. The matrix material 6 is in the final product in the form of a continuous phase without any macroscopic boundaries between the matrix material. Together with the layer of reinforcing material the matrix accomplishes a certain dimensional stability of the article. In accordance with the invention the layer 5 of reinforcing material is a knitted web, which can be easily shaped and retains well its shape, which is of particularly use during the preceding manufacturing stages to be discussed in the following, and also as regards the final product.

Fig. 2 shows schematically the main method stages. The method comprises the introducing of a matrix material 6 in a solid state as separate particles in contact with the knitted web 5 and bonding to the knitted web (points A and B), whereafter a so-called prepreg half-fabricate is obtained, the method further comprising a heat treatment, in which the matrix material 6 being shaped before this into a desired shape by virtue of the deformability of the knitted web 5 is brought to a predetermined temperature in which the final shaping of the article takes place (point C). The heat treatment can comprise a densifying moulding of the matrix material, that is, the material is melted by means of heat while it remains shaped in the desired shape by means of pressure, whereafter after the solidification of the material the article remains in its final shape having a smaller volume than the prepreg half-fabricate. The particles of the matrix material are in this case some suitable thermoplastic material usable in densification moulding and well suitable for the manufacture of shaped articles in the dry impregnation process. The heat treatment can also consist of the carbonization of the matrix material, whereby the polymeric material is carbonized in a suitable protective atmosphere and will form carbon.

In Figs. 3 and 4 are presented some intermediate products obtained after point B of Fig. 2. Fig. 3 illustrates a so-called sandwich-construction, in which the layer 5 of knitted web remains inside the material which has been fed on the opposite sides of the layer 5 of knitted web as two separate felt layers 6a and 6b. The felt layers 6a and 6b are secured to the layer 5 of knitted web by needling whereby the layers 6a and 6b are bonded also mutually by means of some fibres therein. The layers 6a and 6b can be made to form a sandwich-construction on the opposite sides of the layer 5 of knitted fabric also in such a manner that the layers are not fed in the state of a finished non-woven felt but in the state of a card mat. In this case they can be also needled to the layers 5 and to each other.

Fig. 4 shows an alternative according to which the matrix fibres have been brought in a single felt layer or card mat 6 in contact with the layer 5 of knitted web, whereafter the needling has been carried out to allow the layer 6 of matrix material to penetrate into the knitted web as well, that is, the layer 5 of knitted web does not remain on the surface of the material. It will be understood that the location of the layer 5 of knitted web relative to the outer surfaces of the matrix material layer 6 and at the same time the filling of the knitted web with the matrix material can be adjusted by adjusting the needling depth. In this way it is also possible to manufacture a composite article resembling that of Fig. 1, both the opposite outer surfaces being formed by the same matrix material and the knitted web remaining entirely inside the surfaces.

All the constructions shown in Figs. 3-4 can be manufactured in the practice in conventional processing lines, whereon a matrix material layer 6 in the form of a continuous web or several such layers 6a, 6b and a layer or layers 5 of knitted web, which also are in the form of a continuous web, can be brought together (Fig. 2, point A) and secured to each other (Fig. 2, point B).

Fig. 5 illustrates an alternative for bringing the matrix material in contact with the knitted web 5, differing from the alternative of Figs. 3 and 4. The matrix material is in powder form and the powder particles 6c are brought in contact with the knitted web moving forward in the form of the continuous web at point A in Fig. 1. At point B, plastic films 6d are joined on both sides, one of the films being introduced to the advancing web from above and the other of the films is introduced from below for example through a space between two successive conveyor belts. Fig. 2 depicts this possibility by broken lines, and also reels 7 to deliver the films are shown in the same figure. Alternatively, the films can be formed by extrusion simultaneously on the same line and they can be introduced on the matrix and the knitted web. The films are preferably of the same material as the particles 6c of the matrix and they will be melted in a heat treatment (thermoplastic polymers) or will be carbonized (carbonizable polymers), forming a continuous phase.

It will be understood that, in addition to particles 6c, the matrix material can also comprise fibrous matrix material being denoted by broken lines in Fig. 5. This can be brought in contact with the knitted web 5 either before the introducing of the powder, thereafter, or simultaneously with the powder. In the above cases also the needling can be carried out before the joining of the films 6d.

The powder alternative is particularly well suitable when the purpose is to use thermoplastic urethane which in this way can be brought by dry impregnation in contact with the knitted web 5 acting as the reinforcement. By this method various articles having a good impact strength and an elastic structure can be manufactured, such as bellows, conveyor belts or fibration dampers. In said case both the particles 6c and the films 6d are of said material which melts in course of the heat treatment, forming the continuous matrix phase.

A final product containing many reinforcing layers can be manufactured by stacking separate layers comprising the reinforcing layer 5 onto each other before the heat treatment to form the final product. In the treatment the layers are laminated together.

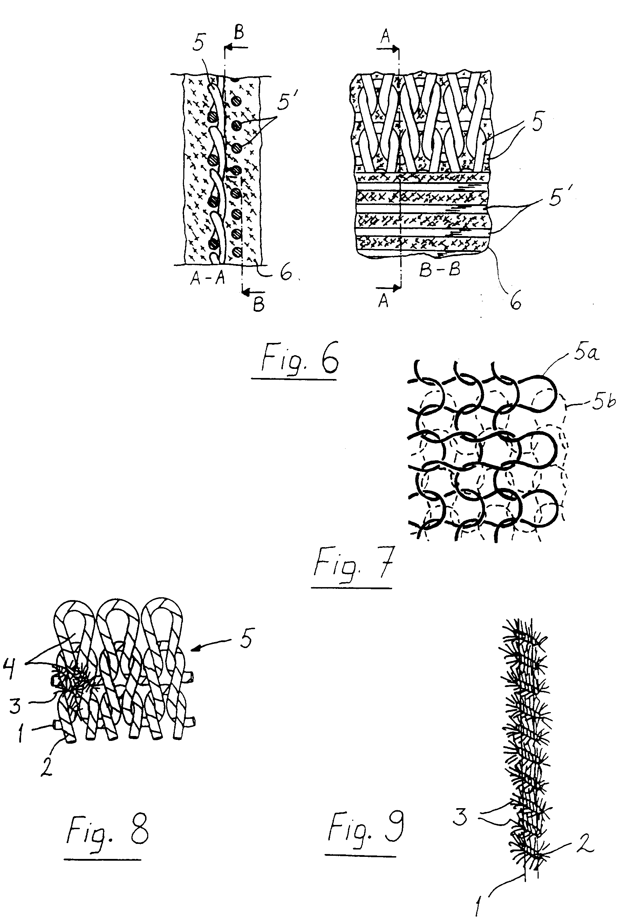

Fig. 6 shows an intermediate product according to a third alternative, according to which the reinforcing material comprises, in addition to the layer 5 of knitted web, also parallel reinforcing elements 5' to give additional strength to the final product in the direction of the reinforcing elements, if desired. Some continuous filament fibre can be used as the reinforcing elements and it will, as apparent from Fig. 6, be also situated inside the matrix material layer 6 constituted of fibres. These elements can be introduced into the-matrix material on the line of Fig. 2 at point A as well, for example by feeding the parallel reinforcing elements and the knitted web one above each other before the bringing of the matrix material in contact therewith, or a layer of matrix material will remain therebetween. Fig. 7 shows further schematically an alternative according to which the product comprises two layers 5a and 5b of knitted web, in which the wales extend crosswise to give more uniform strength properties in the direction of the plane of the reinforcement. This can be accomplished by introducing the knitted webs on top of each other as early as at the point A or at a later stage by stacking the layers containing the knitted webs just before the heat treatment.

Any thermoplastic plastic particles shapeable by means of heat and pressure can be used as the matrix material. The particles can be fibrous, resulting in an intermediate product in the form of felt which yet in the ultimate treatment converts to entirely continuous matrix. As described above, powdery thermoplastic particles can be also introduced to the knitted web at point A. The retention of the particles with the knitted web can be ensured instead of needling by enclosing the knitted web and the powdery particles inside the thermoplastic plastic films passed onto both sides. The thermoplastic films are in this case of the same material as the powder particles and the films can be fixed by thermal bonding onto both sides of the matrix. As mentioned hereinbefore, carbonizable polymers are also suitable for a matrix material either in a fibrous or powdery state, making the pretreatment possible on the same principles as described above.

In addition to the actual matrix material, additives well-known in the plastics and composite technology can be used in the matrix.

A yarn having a continuous mono- or multifilament, such as glass fibre, plastic such as polyester, or metal or ceramic material, is preferably used as the raw material for the layer 5 of knitted web. The yarn formed of the filaments is preferably textured, in which case the loops of the knit will be better filled in the dry impregnation step. Fig. 8 shows also a knit structure which is particularly well suitable for the dry impregnation method in accordance with the invention. The attachment of the particles of the matrix material to the layer 5 of knitted web has been improved by forming the knit from a yarn having fibres 3 extending sideways and filling the void loops 4 of said knit. By this provision, the knitted web will have a strong structure in the direction of its plane and, in addition to that, the fibres 3 contribute to the better impregnation of the knitted web with the particles of the layer 6 of matrix material, resulting in a stronger bond between the reinforcing material and the matrix when forming the product to the final dimensionally stable product. For example when fibres are used as the matrix material they can be attached to the fibres 3 of the layer of knitted web upon penetrating in course on needling inside the loops 4. The bonding of the matrix material layer will be improved and the processing of the intermediate product will be facilitated.

For obtaining the fibres 3 which fill the inside of the knit loops of Fig. 8 the knitted web is manufactured of a yarn shown in Fig. 9. The yarn comprises a yarn 1 in the form of a continuous filament which forms the part of the yarn receiving the tensile stress. Said yarn can be a monofilament or a multifilament and it can be for example of glass fibre or any other filament fibre well resistant to tensile stress. The yarn 2 consisting of staple fibres is wound around the core yarn 1 and has fibres 3 with their ends twisted sideways away from the running direction of the yarn. The staple fibres are most preferably stiff technical fibres such as glass fibres, ceramic fibres or some other inorganic fibres, carbon fibres, or synthetic polymer fibres, such as aramid fibres. Owing to the stiffness of the fibres the ends of the fibres are caused to spread out in a straight condition sideways when the yarn is wound.

Another alternative for the yarn of the knitted web is a hybrid yarn formed solely from staple fibres by spinning, containing reinforcing fibres retaining their form of the knitted web in the final product, and further containing matrix fibers of thermoplastic plastic material which melt in the heat treatment together with the actual matrix material. One example of this provision is the yarn manufactured in the so-called Heltra process. In this yarn the carbon fibres serve as reinforcing fibres and PEEK (polyetheretherketone) serves as the matrix fibers. The matrix fibers of the yarn and the actual matrix material are preferably of the same polymer.

In the invention, any type of knit can be used as the knitted web forming the knit layer 5, such as for example flat stitch knit, interlock stitch knit etc., according to the desired shaping behaviour and strengthening effect. The selection of knit type can be used in adjusting the macroscopic deformation degree of the prepreg and final product. The knitted web is particularly useful in the sense that the degree of the deformation is not dependent on the stretching capacity of the yarn in the reinforcement, but on the macroscopic structure of the knitted web.

Even if a continuous manufacturing line is shown in Fig. 2, starting from the raw material and ending in a finished shaped article, the relatively flexible intermediate product, the so-called prepreg material obtainable after points A and B, can be stored and transported to a totally different place where the final manufacturing of the product takes place (point C).

It is self-evident that the proportions of the matrix material and reinforcement in the total weight of the product can vary within a suitable range. The proportion of the reinforcement in the final product is most preferably more than 50%, and the ratio of 30% matrix and 70% reinforcement can be regarded as a good quideline value.

The matrix material is most preferably of the same polymer, but a blend of two or several polymers is also conceivable, the blend forming the continuous phase in the final product, provided that the properties of the polymers are compatible with each other.

## Claims

1. Method for manufacturing a shaped composite article by dry impregnation, which comprises the combining of a matrix material in the form of separate particles in a solid state with a reinforcing material and subjecting the matrix material to a heat treatment to convert it to a material in the form of a continuous phase, **characterized** in that the reinforcing material comprises at least one layer (5) of knitted web.

2. Method as claimed in claim 1, **characterized** in that the matrix material is brought as fibres in contact with the layer (5) of knitted web, whereafter the matrix is subjected to treatment for converting it.

3. Method as claimed in claim 2, **characterized** in that the matrix fibres are brought as separate layers (6a, 6b) on both sides of the layer (5) of knitted web before the treatment of the matrix.

4. Method as claimed in claim 3, **characterized** in that the layers (6a, 6b) are bonded to the layer (5) of knitted web by needling.

5. Method as claimed in claim 2, **characterized** in that the matrix fibres are brought on one side in contact with the layer (5) of knitted web, whereafter they are bonded by needling in such a fashion that the layer (5) of knitted web will remain inside the layer (6) constituted of the matrix fibres before the treatment of the matrix.

6. Method as claimed in claim 1, **characterized** in that the matrix material comprises powder (6c) which is brought in contact with the layer (5) of knitted web, whereafter optionally a film (6d) is introduced at least on one of the surfaces of the matrix layer.

7. Method as claimed in any of the preceding claims, **characterized** in that in addition to the knit of the layer (5) of knitted web, reinforcing elements (5') extending mainly in one direction are brought in contact with the matrix material.

8. Method as claimed in any of the preceding claims, **characterized** in that the matrix material is of thermoplastic plastic material and the heat treatment for changing the state of the matrix material comprises melting, shaping and solidification of the matrix material by means of heat and pressure.

9. Method as claimed in any of claims 1-7, **characterized** in that at least the matrix material is of a carbonizable polymer, such as phenol, viscose or polyacrylonitrile fibres or powder, the changing of the matrix material comprising the carbonization of the polymer in a suitable environment to form carbon.

10. Method as claimed in any of the preceding claims, **characterized** in that the layer (5) of knitted web comprises fibres (3) directed sideways from the yarn (1, 2) constituting the knitted web, the particles (6) of the matrix material, such as the fibres, being attached to said fibres before the treatment of the matrix.

11. Composite article comprising a continuous phase obtained by heat treatment of a matrix material in a solid state and further comprising a reinforcing material in said continuous phase, **characterized** in that the reinforcing material comprises at least one layer of knitted web impregnated with said continuous phase originating from separate particles.

12. Composite article as claimed in claim 11, **characterized** in that in addition to the knit of the layer (5) of knitted web, the matrix material comprises reinforcing elements (5') extending mainly in one direction.

13. Composite article as claimed in claim 12, **characterized** in that the reinforcing elements (5') extending in one direction run in such a fashion that their main direction is substantially perpendicular to the direction of the wales of the knit of the layer of knitted web.

14. Composite article as claimed in any of the preceding claims 11-13, **characterized** in that the reinforcing material comprises layers (5a, 5b) of knitted web in which the wales run crosswise.

15. Composite article as claimed in any of the preceding claims 11-14, **characterized** in that in order to strengthen the layer of knitted web in the direction of its plane and in order to improve the bond between the matrix and the layer of knitted web, the yarn forming the knit of the layer of knitted web has fibres (3) extending sideways therefrom and filling the loops of the knitted web.

## Patentansprüche

1. Verfahren zum Herstellen eines geformten Komposit-Gegenstandes durch trockenes Imprägnieren, wobei ein Matrixmaterial, das aus einzelnen Feststoffpartikeln besteht mit einem Verstärkungsmaterial verbunden wird, wobei das Matrixmaterial einer Wärmebehandlung unterzogen wird, um es in eine kontinuierliche Phase zu bringen, dadurch gekennzeichnet, dass das Verstärkungsmaterial mindestens eine Gewirkschicht (5) umfasst.

2. Verfahren nach Anspruch 1, dadurch gekennzeichnet, dass ein Matrixmaterial in Form von Fasern in Kontakt mit der Gewirkschicht (5) gebracht wird und dass danach das Matrixmaterial behandelt wird, um es umzuwandeln.

3. Verfahren nach Anspruch 2, dadurch gekennzeichnet, dass das Matrixfasermaterial in Form von Schichten (6a,6b) an beiden Seiten der Gewirkschicht (5) angebracht wird, bevor es behandelt wird.

4. Verfahren nach Anspruch 3, dadurch gekennzeichnet, dass die Schichten (6a,6b) durch Nadelstiche mit der Gewirkschicht (5) verbunden werden.

5. Verfahren nach Anspruch 2, dadurch gekennzeichnet, dass die Matrixfasern auf einer Seite der Gewirkschicht (5) angebracht und mittels Nadelstichen derart mit der Gewirkschicht verbunden werden, dass sich die Gewirkschicht (5) innerhalb der Matrixfaserschicht (6) befindet, bevor die Matrix behandelt wird.

6. Verfahren nach Anspruch 1, dadurch gekennzeichnet, dass pulverförmiges Matrixmaterial (6c) auf der Gewirkschicht (5) angebracht wird und dass danach die Matrixmaterialschicht vorzugsweise auf mindestens einer Seite durch eine Folie (6d) abgedeckt wird.

7. Verfahren nach einem der vorhergehenden Ansprüche, dadurch gekennzeichnet, dass zusätzlich zur Gewirkschicht (5) Verstärkungselemente (5') angebracht werden, welche sich hauptsächlich in einer Richtung erstrecken und mit dem Matrixmaterial in Kontakt gebracht sind.

8. Verfahren nach einem der vorhergehenden Ansprüche, dadurch gekennzeichnet, dass das Matrixmaterial ein thermoplastisches Material ist und dass die Wärmebehandlung zum Umwandeln des Matrixmaterials ein Schmelzen, Formen und Verfestigen des Matrixmaterials durch Erhitzen und Pressen umfasst.

9. Verfahren nach einem der vorhergehenen Ansprüche 1-7, dadurch gekennzeichnet, dass mindestens das Matrixmaterial aus einem karbonisierbaren Polymer, wie Phenol, Viscose oder Polyacrylonitrl in Form von Fasern oder Pulver besteht und dass die Umwandlung des Matrixmaterials ein Karbonisieren des Polymers in einer geeigneten Umgebung umfasst.

10. Verfahren nach einem der vorhergehenden Ansprüche, dadurch gekennzeichnet, dass die Gewirkschicht (5) Fasern (3) aufweist, welche seitlich aus dem Garn (1,2) herausragen, aus welchem das Gewirk hergestellt ist, und dass Partikel (6) wie Fasern des Matrixmaterials sich an die vorgenannten Fasern anheften, bevor die Matrix behandelt wird.

11. Komposit-Gegenstand eine einheitliche Phase aufweist und der durch Wärmebehandlung eines Matrixmaterials in fester Form hergestellt worden ist und zusätzlich ein Verstärkungsmaterial in der kontinuierlichen Phase umfasst, dadurch gekennzeichnet, dass das Verstärkungsmaterial mindestens eine Gewirkschicht umfasst, die mit der einheitlichen Phase imprägniert ist welche ursprünglich aus einzelnen Partikeln bestand.

12. Komposit-Gegenstand nach Anspruch 11, dadurch gekennzeichnet, dass zusätzlich zur Gewirkschicht (5) das Matrixmaterial Verstärkungselemente (5') enthält, die sich im wesentlichen in einer Richtung erstrecken.

13. Komposit-Gegenstand nach Anspruch 12, dadurch gekennzeichnet, dass die Verstärkungselemente (5') im wesentlichen senkrecht zu der Richtung der Gewirkrippen oder Verschlingungen der Gewirkschicht verlaufen.

14. Komposit-Gegenstand nach einem der Ansprüche 11-13, dadurch gekennzeichnet, dass das Verstärkungsmaterial Gewirkschichten (5a,5b) umfasst, bei denen die Gewirkrippen oder Verschlingungen kreuzweise verlaufen.

15. Komposit-Gegenstand nach einem der Ansprüche 11-14, dadurch gekennzeichnet, dass zwecks Verstärkung der Gewirkschicht in seiner Ebene und zur Verbesserung der Bindung zwischen der Matrix und der Gewirkschicht ein Garn verwendet wird, welches seitlich hervorragende Fasern aufweist, welche die Schlaufen in der Gewirkschicht auffüllen.

## Revendications

1. Méthode de fabrication d'un article composite façonné, par imprégnation à sec, comprenant la combinaison d'un matérieau de matrice sous la forme de particules séparées à l'état solide avec un matériau de renforcement et la soumission du matériau de matrice à un traitement thermique pour le convertir en un matériau ayant la forme d'une phase continue, caractérisée en ce que le matériau de renforcement comprend au moins une couche (5) de tissu à maille.

2. Méthode selon la revendication 1, caractérisée en ce que le matériau de la matrice est mis sous la forme de fibres en contact avec la couche (5) de tissu à maille, après quoi la matrice est soumise à son traitement de conversion.

3. Méthode selon la revendication 2, caractérisée en ce que les fibres de matrice sont apportées, sous la forme de couches séparées (6a, 6b), des deux côtés de la couche (5) de tissu à maille avant le traitement de la matrice.

4. Méthode selon la revendication 3, caractérisée en ce que les couches (6a, 6b) sont fixées à la couche (5) de tissu à maille par aiguilletage.

5. Méthode selon la revendication 2, caractérisée en ce que les fibres de matrice sont mises, d'un côté, en contact avec la couche (5) de tissu à maille, après quoi elles sont fixées par aiguilletage de telle façon que la couche (5) de tissu à maille reste à l'intérieur de la couche (6) constituée par les fibres de matrice avant le traitement de la matrice.

6. Méthode selon la revendication 1, caractérisée en ce que le matériau de matrice comprend une poudre (6c), qui est mise en contact avec la couche (5) de tissu à maille, après quoi, éventuellement, un film (6d) est introduit au moins sur une des surfaces de la couche de matrice.

7. Méthode selon une quelconque des revendications précédentes, caractérisée en ce que, en plus du tricot de la couche (5) de tissu à maille, des éléments de renforcement (5') s'étendant principalement dans une direction sont mis en contact avec le matériau de la matrice.

8. Méthode selon une quelconque des revendications précédentes, caractérisée en ce que le matériau de la matrice est une matière plastique thermoplastique et en ce que le traitement thermique qui modifie l'état du matériau de la matrice comprend une fusion, un façonnage et une solidification du matériau de la matrice sous l'effet de la chaleur et de la pression.

9. Méthode selon une quelconque des revendications 1 à 7, caractérisée en ce qu'au moins le matériau de la matrice est en polymère carbonisable, tel que des fibres ou de la poudre de polyacrylonitrile, de phénol, de viscose, la modification du matériau de la matrice comprenant la carbonisation du polymère dans une atmosphère appropriée pour former du carbone.

10. Méthode selon une quelconque des revendications précédentes, caractérisée en ce que la couche (5) de tissu à maille comprend des fibres (3) dirigées latéralement par rapport au fil (1,2) constituant le tissu à maille, les particules (6) du matériau de la matrice, par exemple des fibres, étant fixées aux dites fibres avant le traitement de la matrice.

11. Article composite comprenant une phase continue obtenue par traitement thermique d'un matériau de matrice à l'état solide et comprenant en outre un matériau de renforcement dans ladite phase continue, caractérisé en ce que le matériau de renforcement comprend au moins une couche de tissu à maille imprégné par ladite phase continue provenant de particules séparées.

12. Article composite selon la revendication 11, caractérisé en ce que outre le tricot de la couche (5) de tissu à maille, le matériau de la matrice comprend des éléments de renforcement (5') s'étendant principalement dans une direction.

13. Article composite selon la revendication 12, caractérisé en ce que les éléments de renforcement (5') s'étendant dans une direction sont disposés de telle façon que leur direction principale est sensiblement perpendiculaire à la direction des mailles du tricot de la couche de tissu à maille.

14. Article composite selon une quelconque des revendications 11 à 13 précédentes, caractérisé en ce que le matériau de renforcement comprend des couches (5a, 5b) de tissu à maille dont les mailles sont croisées.

15. Article composite selon une quelconque des revendications 11 à 14 précédentes, caractérisé en ce que, pour renforcer la couche de tissu à maille dans la direction de son plan et pour améliorer la liaison entre la matrice et la couche de tissu à maille, le fil formant le tricot de la couche de tissu à maille a des fibres (3) dépassant latéralement et remplissant les mailles du tissu à maille.
